Europäisches Patentamt

European Patent Office

Office européen des brevets

(11) Publication number: **0 015 040**

A1

(12) **EUROPEAN PATENT APPLICATION**

(21) Application number: **80200145.3**

(22) Date of filing: **21.02.80**

(51) Int. Cl.³: **G 09 B 15/08**

(30) Priority: **23.02.79 GB 7906397**

(43) Date of publication of application:
**03.09.80 Bulletin 80 18**

(84) Designated Contracting States:
**BE DE FR**

(71) Applicant: **GAF CORPORATION**
**140 West 51st Street**
**New York New York 10020(US)**

(72) Inventor: **de Kok, Cornélis J.**
**Nieuwe Baan 104**
**B-9180 Belsele(BE)**

(72) Inventor: **Gyselinck, Jaak**
**Ropstraat 63**
**B-9140 Zele(BE)**

(72) Inventor: **de Smet, Eric**
**Tulpenstraat 19**
**B-2700 Sint-Niklaas(BE)**

(74) Representative: **DE BRABANTER, Maurice et al,**
**Bureau VANDER HAEGHEN 63 Avenue de la Toison d'Or**
**B-1060 Bruxelles(BE)**

(54) **Electronic music teaching system and device.**

(57) The music teaching system and device according to the invention establish a direct and automatic pitch or pitch and rhythm correlation between memory stored sequences of musical tones and/or groups of tones, and student played sequences of musical tones and/or groups of tones, whereby there is provided a visual indication with respect to the memory stored sequence of musical tones and/or groups of tones, as a function of said correlation.

FIG. 1

EP 0 015 040 A1

Croydon Printing Company Ltd.

This invention relates to a new system for teaching music and to a new electronic device suitable for carrying out and conducting such system.

More particularly the invention relates to a new teaching system in which the duty of a music teacher in explaining, demonstrating and exercising the correct correlations between a music lesson on the one hand and music tones or sounds on the other hand, and eventually between music tones and the music notes of said lesson, is taken over by a device establishing automatically such correlations on behalf of the music student.

In fact no mechanical or electromechanical provisions are presently known to applicant, carrying out such automatic correlations and providing the music student with direct and automatic information on the correctness of his performances.

There are known indeed systems providing a pre-established audiovisual correlation between given sets of music tones and music notes, or systems providing automatically visual representation with respect to tones generated on a music instrument, but none of those known systems allowed for an automatic direct and unequivocal correlation between the musical performances of a music student and a given set of musical tones.

The invention now provides a means for such automatic direct and unequivocal correlation between music lessons and the performances of a music student. Basically, the system compares the music played by the student with a programmed lesson and gives automatically indications on the errors made by the student.

The new music teaching system according to the invention therefor establishes a direct and automatic pitch or pitch and rhytm correlation between memory stored sequences of musical tones and/or groups of tones, and student played sequences of musical tones and/or groups of tones, whereby there is provided a visual indication with respect to the memory stored sequence of musical tones and/or groups of tones, as a function of said correlation.

The functions thus established and provided in said new music teaching system, may thereby be controlled, carried out and conducted by electronic and/or electromechanical means, which may for instance consist of a device as hereinfurther described also in accordance with the invention.

According to the music teaching system of the invention, such electronic and/or electromechanical means will contain in memory one or more reference sequences of musical tones and/or groups of tones, which constitute the lessons to be learned by the music student, such as melodies, tunes, musical scales, etc...

There should thereby of course preferably be provided the possibility to change the lessons stored in the memory of the electronic and/or electromechanical means conducting the system of the invention so as to afford unlimited teaching possibilities to said system.

In the case of a teaching system according to the invention establishing a pitch and rhythm correlation between the memory stored and student played sequences, there may preferably further be comprised a provision for relative and/or absolute tolerance with respect to the rhythm correlations between the memory stored and student played sequences of tones and/or groups of tones.

In a first prefered embodiment of the invention, the visual indication with respect to the memory

- 3 -

stored sequence can in particular consist in showing on a display panel the musical note representation of the correct tones of said correlation between said memory stored sequence and said student played sequence of tones and/or groups of tones.

In another or a further prefered embodiment of the invention, the visual indication with respect to the memory stored sequence comprises showing an error indication on a display panel with respect to wrongly played tones in said correlation between said memory stored sequence and said student played sequence of tones and/or groups of tones.

According to the most prefered embodiment of the new music teaching system of this invention, said system will provide the opportunity for performing at will, the following functions :
- reproducing in an audible manner the memory stored sequence of musical tones and/or groups of tones ;
- reproducing in an audible manner the student played sequence of musical tones and/or groups of tones ;
- establishing the direct and automatic correlation between said memory stored and student played seqeunces of musical tones and/or groups of tones ;
- showing in a visible manner on a display, part or the whole of the musical note representation of said memory stored and/or student played sequences of musical tones and/or groups of tones ;
- providing visual indication in said displayed musical note representation, about the correctly and wrongly played tones in said correlation between said memory stored and said student played sequences of musical tones and/or groups of tones.

It may thereby comprise further provisions for automatically re-establishing the further correlation between said memory stored and said student played sequences in spite of previous wrong tones and a limited number of missing and/or exceeding tones in the student played sequence of musical tones and/or groups of tones.

The invention on the other hand also provides a new electronic music teaching device suitable for carrying out and conducting the system according to the invention, which comprises :

- a microprocessor ;
- means, cooperating with said microprocessor, for storing reference sequences of musical tones and/or groups of tones and for reproducing said reference sequences ;
- means for allowing a user to produce sequences of musical tones and/or groups of tones ;
- means cooperating with said microprocessor establishing a direct and unequivocal correlation between said user produced sequence and said reference sequence ;
- means , cooperating with said microprocessor, for generating visual indication with respect to the reference sequence of musical tones and/or groups of tones, as a function of said correlation between said user produced sequence and said reference sequence.

More specifically such new electronic music teaching device may comprise :

- a microprocessor ;
- a reader unit, cooperating with said microprocessor, for reading coded reference sequences of musical tones, and/or groups of tones from suitable software supports, whereby said coded information is stored into memory of the electronic microprocessor system ;
- a sound generating system cooperating with said microprocessor, adapted to produce musical tones and to reproduce the decoded reference sequence of musical tones from the microprocessor system memory ;
- a keyboard cooperating with said sound generating system, for allowing a user to produce audible tones, groups of tones and/or sequences of tones and/or groups of tones, according to his own selection ;

- a display control system, cooperating with said microprocessor for generating visual information on a display unit comprised by or connected to said electronic music device ;

whereby the microprocessor system of the device is programmed so as to allow a direct an unequivocal correlation between the user produced sequence of tones and the reference sequence of tones stored into the microprocessor system memory, thereby operating the display control system to provide visual indication with respect to said reference sequence of tones as a function of said correlation.

According to a prefered feature of the invention, the microprocessor of such new music teaching device may in particular comprise a built-in crystal oscillator, the musical tones being derived from said crystal oscillator by programmable timers.

Such programmable timers will allow the generation of tones with a pitch error of less than 0.1 %.

In a first embodiment of the new device according to the invention, the reader unit thereof may in particular be adapted to read coded reference sequences of musical tones and/or groups of tones from magnetic software supports selected from magnetic tapes, magnetic discs, magnetic cards and the like.

In another embodiment of the device, the reader unit may on the other hand be adapted to read coded reference sequences of musical tones and/or groups of tones from transparent films bearing an optic code with respect to such reference sequence.

According to a further embodiment of the new music teaching device of the invention, the means or system for generating visual indication is preferably adapted to operate a display unit built of individual lights, corresponding in one to one correlation to the individual tones or groups of tones of the stored or storable reference sequences, said lights being selectively lightable as a function of the direct and unequivocal correlation between the user produced sequences and the reference sequences of tones or groups of tones, whereby lighted lights correspond to correctly produced tones whereas extinguished lights correspond to wrongly produced tones, or vice versa.

Said display unit, built of individual lights may thereby conveniently make part of the device itself.

In such case, the device may very suitably correspond to the embodiment in which the reader unit is adapted to read coded reference sequences of musical tones and/or groups of tones from transparent films bearing an optic code with respect to such reference sequence, whereby the display unit built of individual lights may very suitably be adapted to receive said transparent film after its passage in said reader unit, said transparent film further bearing a visual image of the musical note representation of the coded reference sequence of musical tones and/or groups of tones also borne by said transparent film, whereby the lights of said display unit are so arranged to each correspond respectively to one note or group of notes of said representation, thus allowing lighted indication of said note reprentation as a function of the correlation between the user produced sequences and the reference sequence of tones or groups of tones.

According to another further embodiment of the new music teaching device of the invention, the means or system for generating visual indication is adapted to operate a cathode ray tube (C R T) - display or television (TV) - screen.

Said means or system for generating visual indication may thereby preferably comprise a character generator able to write the characters normally used is musical note representation (such as notes, linked notes, clefs, measure signs, mols, sharps, rest signs, restoration signs, measure lines, etc...).

It may further also suitably be adapted to generate a special error indication with respect to wrongly produced tones in the correlation between the reference sequence and the user produced sequence.

It is a further desirable feature of the invention that the microprocessor system of the music teaching device is also adapted to store the user produced sequence of musical tones and/or groups of tones.

The new music teaching device according to the invention, may further also very suitably and preferably be adapted to reproduce whenever desired, any stored sequence of tones and/or groups of tones, (either any stored reference sequence and/or any stored user produced sequence).

The device according to the invention may also suitably comprise means for selectively limiting the reproduction of a stored sequence of tones and/or groups of tones to a section of said sequence.

This will enable the music student to specifically re-listen and excercise that particular section of the lesson that causes him greater trouble or that he wishes to concentrate himself on, without having to play back again and again the complete sequence of his lesson and/or of his exercise.

Another prefered feature of the invention provides for a metronome-timing circuitry in the device cooperating with the microprocessor system, whereby said metronome-timing circuitry controls the rhythm correlation between the reference sequence and the user produced sequence of tones and/or groups of tones.

The device may thereby comprise independant regulation means for said metronome-timing circuitry, for speeding up or slowing down of the metronome-timing performance, thereby allowing for the speeded up or slowed reproduction of any stored sequence of tones and/or groups of tones.

Such feature is most convenient in order to allow the music student to adapt the play back speed of the reference sequence and/or the re-listening of his own exercise sequences, and to adapt the tempo for the execution of his exercises, to his abilities and to his study progress.

The metronome performance can thereby consist in audio or visual indications, or both.

According to still another possible feature of the device of the invention, there may be provided means for increasing or decreasing the pitch of all produced and/or reproduced tones by one octave, thus increasing the performance range of said music device by two octaves.

Apart from its specific function as a teaching device, the device according to the invention may of course in most of its embodiment, be adapted to be useable as a conventional music instrument, by virtue of its means for allowing a user to produce sequences of musical tones, and in particular as a conventional electronic organ in such embodiments comprising a piano-type keyboard therefor.

The embodiment of the device, comprising a means or system for generating visual indication which is specifically adapted to operate a cathode ray tube (C R T)-display or television (TV)-screen, may further also very conveniently be adapted to provide visual pitch indication on said CRT-display or TV-screen, when producing tone and/or tone group sequences on said device according to ones own selection (i.e. in a mere instrument-mode of the device).

According to still further features of
the invention, the microprocessor system of the new music
teaching device is preferably programmed in such manner
to automatically reconstruct and re-establish the one to
one correlation between the reference sequence and the
user produced sequence of tones and/or groups of tones,
in spite of any wrong tones, and a limited number of
missing and/or exceeding tones in said user produced sequence.

The new device according to the invention
may further be adapted to allow the playing and the
correlating of chords or groups of two or more tones at
the same time.

The latter features of the device will only
be limited by the overall capacity of its microprocessor
system. Depending on such capacity the device may thus
for instance allow the playing of three, six or even more
tones at the same time, so that the device may well be
used for playing and correlating, i.e. teaching, the
execution of two staffs synchronously (left and right
hand on the organ-type embodiments).

The characteristics and features of the
invention set forth hereabove as well as further features
and details thereof, will be explicitated through the
following detailed description, in which reference is
made to the attached drawings which represent by way of
a purely illustrative example one specific embodiment
of a music teaching device in accordance with said
invention.

In these drawings :

Figure 1 is a view in perspective of a
music teaching device in accordance with the invention ;

Figure 2 is an enlarged view of the display
unit of the device of figure 1, with partially broken
away front cover.

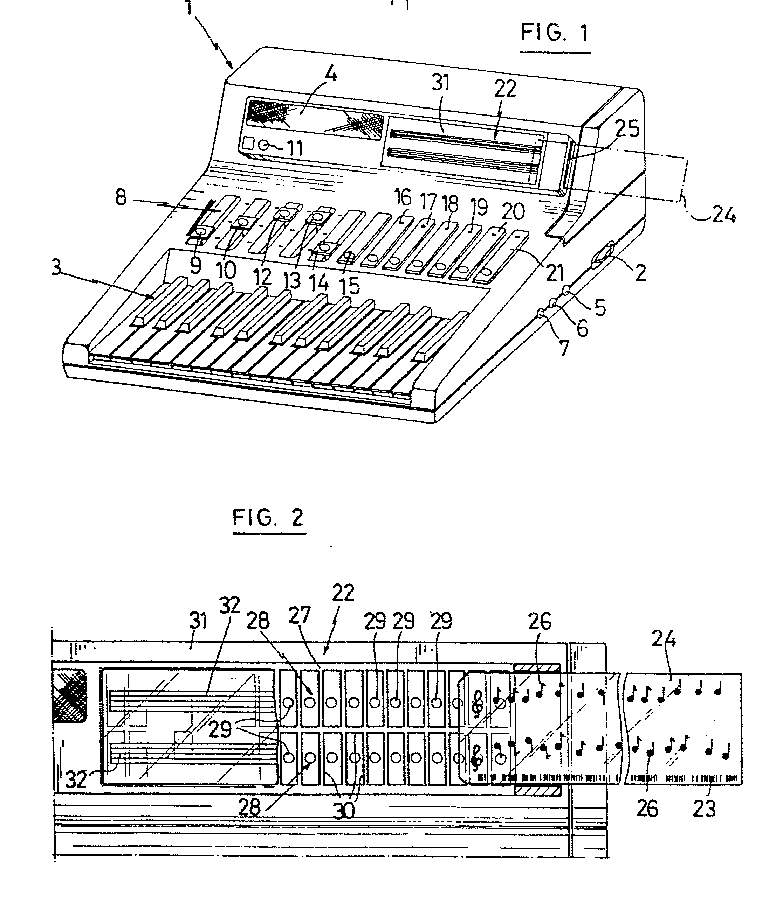

The represented embodiment of the invention, consisting in a music teaching device generally designated by the reference numeral 1 (figure 1), appears as an electronic organ adapted to perform the music teaching system in accordance with the invention.

The device 1 therefor comprises on the one hand a set of operation means which are conventional for such electronic music instruments, as well as novel features, in accordance with the invention, with respect to such mere music instrument operation of the device, and on the other hand a set of functions and control means which are specific to the music teaching duty of said device.

The represented device 1 thus comprises a main power switch 2, and a piano-type keyboard 3 (in the present case 27 notes, from f to g2) for allowing the music student or player to play any desired sequence of tones or groups of tones.

It further comprises an internal loudspeaker 4 and auxiliary sockets 5, 6 and 7 for connecting respectively (an) external loudspeaker(s), an external amplifier and/or external headphones.

The musical tones of the instrument 1 are derived from a cristal oscillator built-in in the microprocessor of the device.

In the specific embodiment described here, said microprosessor may for instance consist of a 8048 - microprocessor.

The device 1 further includes a control panel, generally indicated by the reference numeral 8, which comprises :
- a volume control slider 9,
- tempo control sliders 10 and 12 for the coarse regulation (slider 10) and the fine regulation (slider 12) of the metronome speed between 40 and 240 strokes pro minute ;

- a metronome control cursor switch 13, allowing three positions for selecting between an audio mode metronome indication (through the internal or external loudspeaker), a visual mode metronome indication (through a display light 11) and a mode without metronome indication (off. position) ;

- an octave modifier cursor switch 14 allowing, according to the selected position thereof, to increase, respectively decrease the pitch of each key of the instruments keyboard 3 by exactly one octave, thus broadening the overall performance of the instrument by two octaves ;

- an on - off cursor switch 15 for adding a vibrato feature (known per se for such electronic organ devices) to the performance of the instrument ;

- keybuttons 16, 17, 18, 19, 20 and 21 for controlling the specific teaching and excersizing duties of the device, in accordance with the music teaching system of the present invention, as explained more in detail herebelow.

The specific means in connection with the actual teaching function of the device mainly include a reader  display unit generally indicated by the reference numeral 22 in figure 1 and represented in greater detail in figure 2.

The reader-display unit 22, comprises a reader (not appearing on the drawings) for reading coded information 23 for a music  lesson, from a transparent film card 24 (optical code). This coded information is entered and stored into a memory (RAM) belonging to the microprocessor system of the device, by introducing the card 24 into the reader-display unit 22 through a guiding slit 25 therefor.

As soon as the card 24 is thus introduced into the device, the lesson tune (sequence of musical tones and/or groups of tones) can be made to be heard and repeated as often as asked for, by  actuating the key 18 starting the so-called "listen-mode".

Apart from the coded information 23 referred to hereabove, the film card 24 further also bears visual musical note information 26 in connection with the considered music lesson.

The vizualization of this note representation 26 is performed by means of the display means 27 of the reader-display unit 22, and controled by the microprocessor system of the teaching device.

The display means is built of two arrays 28 of lights 29 (in the present case two arrays of 20 lights) individually separated by partition walls 30, and of a diffuser screen 31 bearing the representation of two musical staffs 32.

The notes of the musical representation 26 are thereby written in such manner on the film card 24, that when said card 24 is positioned in the reader-display unit 22, each note or group of notes finds itself behind the staffs 32 of the diffuser-screen 31, in a one to one correspondance with the lights 29 of the display means 27, and that when the lights 29 are off, it is not possible to see the musical note representation.

The complete note representation 26 of the lesson may however be displayed by putting the display control switch 16 in on position and actuating the "listen-mode" key 18.

By actuating the key 19 ("play-mode") the music student can try to repeat the music sequence of the lesson on the keyboard 3 of the device. Thereby only those notes which have been correctly played, will appear lighted on the display screen 31, owing to the correlation that is being established by the microprocessor system between the melody played by the student and the reference melody of the lesson stored in the memory of the microprocessor.

When the display control switch 16 is in off-position, the correctly played notes will light up synchronously with the tones played, but when the display control switch 16 is in on-position the correctly played notes will remain projected on the screen 31, whereby only the wrongly played notes will keep extinguished.

When the rhythm correlation key 17 is not in use position, the correlation between the lesson melody and the student melody is only established in connection with the pitch of each tone, but when the rhythm correlation key is in use, the complete correlation in connection with pitch and rhythm is established.

The student can have his own played melody repeated as often as desired, by actuating the " play back" key 20. The displaying of the note representation will thereby perform in exactly the same manner as for the "play-mode" (key 19) of the device explained hereabove.

The speed of the metronome performance and therefore the speed of the "listen-mode", and the "play back-mode" repetitions of stored melodies depending from said metronome performance, can be controled separately for each mode ("listen-mode", "play-mode" and "play back-mode") by setting the metronome speed control sliders 10 and 12 in the desired position.

By actuating the key 21 of the control panel 8, the device will be set in an "instrument-mode" whereby the reader-display unit 22, and the teaching or correlation function of the device will be disconnected. The device will then perform as a mere electronic organ, whereby the volume control 9, metronome control 10, 12 and 13 octave, modification function 14, vibrato function 15, and rhythm speed control function 17 are maintained.

In view of the above specification of the invention it must be evident that said invention is not limited to the details disclosed in the specific description hereabove of one embodiment thereof, and that numerous modifications may be provided to said details and many other embodiments of the invention may be proposed without leaving the general scope of the invention as defined in the following claims.

0015040

- 14 -

C L A I M S

1.- Automatic music teaching system, characterized in that there is automatically established a continuous and sequential pitch or pitch and rhythm correlation between a memory stored audibly produced sequence of musical tones and/or groups of tones, and a student played sequence of musical tones and/or groups of tones, whereby there is provided a visual indication with respect to the memory stored sequence of musical tones and/or groups of tones, as a function of the sequential correspondances and errors of said correlation.

2.- Music teaching system according to claim 1, characterized in that there is made the provision for relative and/or absolute tolerances with respect to the rhythm correlations between the memory stored and student played sequences of tones and/or groups of tones.

3.- Music teaching system according to any one of the preceding claims, characterized in that the visual indication with respect to the memory stored sequence consists in showing on a display panel the musical note representation of the correct tones and/or an error indication with respect to wrongly played tones of said correlation between said memory stored sequence and said student played sequence of tones and/or groups of tones.

4.- Music teaching system according to any one of the preceding claims, characterized in that there is provided the opportunity for performing at will, the following functions :
- reproducing in an audible manner the memory stored sequence of musical tones and/or groups of tones ;
- reproducing in an audible manner the student played sequence of musical tones and/or groups of tones ;
- establishing the direct and automatic correlation between said memory stored and student played sequences of musical tones and/or groups of tones ;

- showing in a visible manner on a display, part or the whole of the musical note representation of said memory stored and/or student played sequences of musical tones and/or groups of tones ;

- providing visual indication in said displayed musical note representation, about the correctly and wrongly played tones in said correlation between said memory stored and said student played sequences of musical tones and/or groups of tones.

5.- Music teaching system according to any one of the preceding claims, characterized in that it comprises a provision for automatically re-establishing the further correlation between said memory stored and said student played sequences in spite of previous wrong tones, and a limited number of missing and/or exceeding tones in the student played sequence of musical tones and/or groups of tones.

6.- Electronic music teaching device suitable for carrying out and conducting the system according to claim 1 or 2, characterized in that it comprises :

- a microprocessor ;
- means, cooperating with said microprocessor, for storing reference sequences of musical tones and/or groups of tones and for reproducing said reference sequences ;
- means for allowing a user to produce sequences of musical tones and/or groups of tones ;
- means cooperating with said microprocessor establishing a direct and unequivocal correlation between said user produced sequence and said reference sequence ;
- means, cooperating with said microprocessor, for generating visual indication with respect to the reference sequence of musical tones and/or groups of tones, as a function of said correlation between said user produced sequence and said reference sequence.

7.- Electronic music teaching device according to claim 6, characterized in that it comprises :

- a microprocessor ;
- a reader unit, cooperating with said microprocessor, for reading coded reference sequences of musical tones and/or groups of tones from suitable software supports, whereby said coded information is stored into memory of the electronic microprocessor system ;
- a sound generating system cooperating with said microprocessor, adapted to produce musical tones and to reproduce the decoded reference sequence of musical tones from the microprocessor system memory ;
- a keyboard cooperating with said sound generating system, for allowing a user to produce audible tones, groups of tones and/or sequences of tones and/or groups of tones, according to his own selection ;
- a display control system, cooperating with said microprocessor for generating visual information on a display unit comprised by or connected to said electronic music device ;

whereby the microprocessor system of the device is programmed so as to allow a direct and unequivocal correlation between the user produced sequence of tones and the reference sequence of tones stored into the microprocessor system memory, thereby operating the display control system to provide visual indication with respect to the reference sequence of tones stored into the microprocessor system memory as a function of the correlation between said stored reference sequence and said user produced sequence.

8.- Electronic music teaching device according to claim 6 or 7, characterized in that the means or system for generating visual indication is adapted to operate a display unit built of individual lights, corresponding in one to one correlation to the individual tones or groups of tones of the stored or storeable reference sequences, said lights being selectively lightable as a function of the direct and unequivocal correlation between the user produced sequences and the reference sequences of tones or groups of tones, whereby lighted lights correspond to correctly produced tones whereas extinguished lights correspond to wrongly produced tones, or vice versa.

9.- Electronic music teaching device according to claim 7 and 8, characterized in that said display unit built of individual lights makes part of said device and is adapted to receive said software support after its passage through said reader unit, whereby said software support consists of a transparent film comprising a magnetic or optic code track containing the coded information about the reference sequence of musical tones and/or groups of tones, readable by said reader unit, and bearing a visual image of the musical note representation of the coded reference sequence of musical tones and/or groups of tones also borne by said transparent film, the lights of said display unit being so arranged to each correspond respectively to one note or group of notes of said representation as a function of the correlation between the user produced sequences and the reference sequence of tones or groups of tones.

10.- Electronic music teaching device according to any one of claims 6 and 7, characterized in that the means or system for generating visual indication is adapted to operate a cathode ray tube (C.R T)-display or television (TV)-screen and comprises a character generator which is able to write characters normally used in musical note representation, and, optionally, to generate a special error indication with respect to wrongly produced tones in the correlation between the reference sequence and the user produced sequence.

11.- Electronic music teaching device according to any one of claims 6 to 10, characterized in that its microprocessor comprises a built-in crystal oscillator, the musical tones being derived from said crystal oscillator by programmabel timers.

12.-       Electronic music teaching device according to any one of claim 6 to 11, characterized in that its microprocessor system is also adapted to store the user produced sequence of musical tones and/or groups of tones.

13.-       Electronic music teaching device according to any one of claims 6 to 11, characterized in that it is adapted to reproduce any stored sequence of tones and/or groups of tones, whenever desired.

14.-       Electronic music teaching device according to claim 13, characterized in that it further comprises means for selectively limiting the reproduction of a stored sequence of tones and/or groups of tones to a section of said sequence.

15.-       Electronic music teaching device according to claims 6 to 14, characterized in that it comprises metronome-timing circuitry cooperating with the microprocessor system, whereby said metronome-timing circuitry controls the rhythm correlation between the reference sequence and the user produced sequence of tones and/or groups of tones.

16.-       Electronic music teaching device according to claims 13 and 15, characterized in that it comprises independant.regulation means for said metronome-timing circuitry, for speeding up or slowing down of the metronome-timing performance, thereby allowing for the speeded up or slowed down reproduction of any stored sequence of tones and/or groups of tones.

17.-       Electronic music teaching device according to claim 10 or to claim 10 and any one of claims 13 to 16, characterized in that it is adapted to provide visual pitch indication on said CRT-display or TV-screen, when producing tone and/or tone group sequences on said device according to ones own selection.

18.-       Electronic music teaching device according to any one of claims 6 to 17, characterized in that its microprocessor system is programmed in such manner to automatically reconstruct and re-establish the one to one correlation between the reference sequence and the user produced sequence of tones and/or groups of tones, in spite of any wrong tones, and a limited number of missing and/or exceeding tones in said user produces sequence.

0015040

FIG. 1

FIG. 2

## European Patent Office

## EUROPEAN SEARCH REPORT

| | DOCUMENTS CONSIDERED TO BE RELEVANT | | CLASSIFICATION OF THE APPLICATION (Int Cl.) |
|---|---|---|---|
| Category | Citation of document with indication, where appropriate, of relevant passages | Relevant to claim | |
| X | US - A - 4 012 979 (COMPUTEACHER LTD.)  * Entire document *  -- | 1-18 | G 09 B 15/08 |
| P | FR - A - 2 402 262 (LOBAK)  * Page 1, lines 26-40; page 2, lines 1-30; claims *  ---- | 1 | |

**TECHNICAL FIELDS SEARCHED (Int.Cl.)**

G 09 B 15/08
15/04

**CATEGORY OF CITED DOCUMENTS**

X. particularly relevant
A. technological background
O: non-written disclosure
P: intermediate document
T theory or principle underlying the invention
E: conflicting application
D: document cited in the application
L citation for other reasons

&. member of the same patent family, corresponding document

The present search report has been drawn up for all claims

| Place of search | Date of completion of the search | Examiner |
|---|---|---|
| The Hague | 30-05-1980 | PELSERS |

EPO Form 1503.1   06.78